# EUROPEAN PATENT APPLICATION

(11) **EP 3 525 503 A1**
(43) Date of publication of application: **14.08.2019**
(21) Application number: 18155900.6
(22) Date of filing: 08.02.2018
(51) Int. Cl.: H04W 12/06

(54) **REGISTERING OR AUTHENTICATING USER EQUIPMENT TO A VISITED PUBLIC LAND MOBILE NETWORK**

(71) Applicant: Nokia Technologies Oy, 02610 Espoo (FI)
(72) Inventor: Jerichow, Anja, 85567 Grafing (DE)
(74) Representative: Espatent Oy

(57) **Abstract**

User equipment is registered or authenticated to a visited public land mobile network, VPLMN. The VPLMN receives from the user equipment a verification hash; and a concealed identifier. The concealed identifier comprises a replay attack protector and one or more input parameters encrypted to be decryptable by a home public land mobile network, HPLMN. The verification hash comprises a hash result of hash source data comprising each of the concealed identifier; the one or more input parameters; and a replay attack protector. The VPLMN sends the concealed identifier to the HPLMN and receives from the HPLMN a second authentication vector comprising a challenge and a verification hash that is hash result of each of the concealed identifier; of the one or more input parameters; and of the replay attack protector. The VPLMN verifies if the verification hash matches with the verification hash VH received from the user equipment and accordingly proceeds or refuses to register or authenticate the user equipment to the VPLMN.

## Description

### TECHNICAL FIELD

Various example embodiments relate to registering or authenticating user equipment to a visited public land mobile network.

### BACKGROUND

This section illustrates useful background information without admission of any technique described herein representative of the state of the art.

Public Land Mobile Networks (PLMN) have greatly evolved during past decades from rudimentary voice communication enablers to mobile broadband Internet devices. Currently, a fifth generation of mobile networks is being designed e.g. by further developing the Long-Term Evolution (LTE). Voice and data communications are encrypted for maintenance of privacy of the users in all countries save few exceptions. However, there is a need to enable societies to protect themselves or investigate crimes by means of legal interception in which legal authorities are allowed to receive communication of an intercepted subscriber without normal encryption of the PLMN.

In mobile communications, there are typically two independent identities for each subscriber: an identifier of the User Equipment (UE) that identifies e.g. a phone make and model, and a subscription identity that identifies a particular subscription of a PLMN. Typical examples of the UE and subscription identifiers are an International Mobile Equipment Identity (IMEI) or a Permanent Equipment Identifier (PEI) and an International Mobile Subscriber Identity (IMSI). Each mobile phone user, or mobile broadband device, needs to pay for the service and the subscription assigns the costs of the use to the respective pre-payments or credit contract made by a payee. Moreover, the subscription determines a phone number in use so that the user of the subscription and only that user should be able to place calls and receive calls with that phone number. As of GSM, the subscription and UE identifications have been separate so that different subscriptions can be used in one UE and vice versa. The UE identification helps to recover stolen mobile phones, for example.

Mobile communications impose particular challenges for authenticating the true subscriber, which is important both for authenticating a subscriber to avoid abuse of a subscription of someone else and also for the lawful interception. It is yet desirable to avoid over-the-air exchange of any long-term subscriber identity of the subscription at all by use of a temporary subscriber identity to further improve privacy of the users. Thus, the long-term subscriber identity is replaced by the temporary subscriber identity as soon as initial registration of the subscriber is completed. The temporary subscriber identity is only known by the visited PLMN, i.e. VPLMN, and the subscriber's subscription module. However, in mobile communication the concealing of the subscriber identity prevents lawful interception of that subscriber in particular.

For lawful interception, it suffices if any long-term identifier is known relating to the UE used for communication. The UE identity such as the IMEI (International Mobile Equipment Identity) or PEI (permanent equipment identifier) in 5G and/or the subscriber identity such as the IMSI or MISISDN (Mobile Station International ISDN Number) or SUPI (Subscription Permanent Identifier) in 5G networks can be used to target lawful interception as desired. A long-term identifier is used in this document generally for reference to any identifier with which legal interception can be targeted to a desired user equipment or subscription. A concealed identifier is used in this document generally for reference to any identifier that is configured to indicate the long-term identifier in a concealed manner hindering third parties from determining the long-term identifier.

Various solutions have been proposed for indicating the long-term identifier to the VPLMN. These solutions may require either or both entrusting the VPLMN to perform the authentication of the UE and sending an additional pair of radio messages in order to verify the long-term identifier of the UE so that availability of lawful interception could be verified at the VPLMN, and these solutions may be inoperable if the VPLMN refuses to register or authenticate the UE to an encrypted long-term identifier.

### SUMMARY

Various aspects of examples of the invention are set out in the claims.

According to a first example aspect of the present invention, there is provided a method for registering or authenticating user equipment to a visited public land mobile network, VPLMN, comprising:
receiving by the VPLMN from the user equipment a verification hash VH; and a concealed identifier SUCI;
wherein the concealed identifier SUCI comprises a replay attack protector R and one or more input parameters (e.g. SUPI) encrypted to be decryptable by a home public land mobile network, HPLMN; and the verification hash VH comprises a hash result of hash source data comprising each of the concealed identifier; the one or more input parameters; and a replay attack protector;
sending by the VPLMN the concealed identifier to the HPLMN; and
receiving by the VPLMN from the HPLMN a second authentication vector AV2 comprising a challenge RAND; and a verification hash VH* that is hash result of each of the concealed identifier SUCI; of the one or more input parameters (e.g. SUPI); and of the replay attack protector R;
verifying if the verification hash VH* matches with the verification hash VH received from the user equipment and if yes:
proceeding to register or authenticate the user equipment to the VPLMN; and otherwise refusing to register or authenticate the user equipment to the VPLMN.

The second authentication vector AV2 may further comprise a second response verifier HXRES* formed by cryptographic hashing of at least a first response verifier XRES*. The second response verifier HXRES* may be formed by cryptographic hashing at least one of: a challenge RAND; the first response verifier XRES*; and authentication token AUTN; the second session key K_{SEAF}. The second authentication vector AV2 may further comprise the second session key K_{SEAF}.

The method may further comprise receiving authentication data formed at the user equipment. The method may further comprise sending an authentication confirmation message to the HPLMN and receiving the input parameters from the HPLMN. The method may further comprise computing the local version VH** of the verification hash and comparing the local version VH** of the verification hash with the verification hash VH received from the user equipment or with the verification hash VH* received from the HPLMN. The method may further comprise refusing the registering of the user equipment to the VPLMN if the local version VH** of the verification hash does not match with the verification hash VH received from the user equipment or with the verification hash VH* received from the HPLMN.

The concealed identifier SUCI may be sent by the VPLMN to the HPLMN together with an identifier of the VPLMN.

The input parameters may comprise any one or more of: a subscriber identity; an international mobile subscriber identity; a subscription permanent identifier; a mobile station international ISDN number; a user equipment identity such as an international mobile equipment identity or a permanent equipment identifier. Alternatively, the long-term identifier may be a subscriber identity; an international mobile subscriber identity; a subscription permanent identifier; or a mobile station international ISDN number and the input parameters may comprise an international mobile equipment identity or a permanent equipment identifier.

The method may further comprise sending by the VPLMN to the user equipment a selection definition of one or more input parameters;

The one or more input parameters may include the long-term identifier.

The method may comprise receiving by the VPLMN from the user equipment the verification hash VH in a registering or an authentication response or in a Network Access Stratum (NAS) Security Mode Command (SMC) complete message. The receiving of the authentication response or NAS SMC complete message may relate to authenticating the user equipment to the VPLMN. The registering message may be an attach request message. The registering message may be received by the VPLMN before any radio bearer encryption information has been provided to the user equipment from the VPLMN, such as a challenge of an authentication vector.

The cryptographic hash function may be a public cryptographic hash function. The cryptographic hash function may be a one-way hash function. The cryptographic hash function may be or employ any one or more of: a universal hash function; a keyed cryptographic hash function; and an unkeyed cryptographic hash function.

The method may comprise transfer of the replay attack protector between the VPLMN and the user equipment only with cryptographic protection resulting from encryption or cryptographic hashing.

The replay attack protector may be independently generated at the user equipment. The replay attack protector may be randomized at the user equipment. The replay attack protector may be randomized by the user equipment. The replay attack protector may be randomized by a subscriber identity module accessible by the user equipment. The replay attack protector may be configured to prevent re-use of earlier captured messages by third parties. The replay attack protector may comprise an arbitrary code for using only once. The replay attack protector may be configured to be used more than once by the user equipment by a likelihood less than once per million replay attack protectors. The replay attack protector may comprise a sequential counter maintained by the user equipment. The replay attack protector may comprise a time value expressed as a number of time intervals starting of a given date and time such as seconds elapsed since a given date and time.

The concealed identifier may be encrypted with a shared secret of the user equipment and the HPLMN.

According to a second example aspect of the present invention, there is provided a method for enabling by a home public land mobile network, HPLMN, registering or authenticating user equipment to a visited public land mobile network, VPLMN, the method comprising:
receiving by the HPLMN from the VPLMN a long-term identifier request for a long-term identifier SUPI of the user equipment, the long-term identifier request comprising a concealed identifier SUCI that is concealed from others by encryption decryptable by the HPLMN;
de-concealing the concealed identifier SUCI to determine a replay attack protector R; and one or more input parameters P1...Pn including a long term identifier SUPI of the user equipment;
computing a verification hash VH* that is hash result of each of the concealed identifier SUCI; of the one or more input parameters (e.g. SUPI); and of the replay attack protector R;
computing a first authentication vector AV1 that comprises at least a challenge; a first response verifier XRES* and a verification hash VH* that is hash result of each of the concealed identifier SUCI; of the one or more input parameters (e.g. SUPI); and of the replay attack protector R;
storing the first response verifier XRES*;
computing a second response verifier HXRES* based on the first response verifier XRES* and the challenge of the authentication vector;
computing a second session key K_{SEAF} based on the first session key K_{AUSF};
forming a second authentication vector AV2 that comprises the second response verifier HXRES* instead of the first response verifier XRES* and the second session key K_{SEAF} instead of the first session key K_{AUSF};
sending the second authentication vector AV2 to the VPLMN; and
receiving from the VPLMN an authentication confirmation message comprising a UE response verifier RES* produced by the user equipment and checking if the UE response verifier RES* matches the stored first response verifier XRES* and considering the confirmation message as successfully verified if yes.

According to a third example aspect of the present invention, there is provided a method in a first authentication entity of a home public land mobile network, HPLMN, for registering or authenticating user equipment to a visited public land mobile network, VPLMN, the method comprising:
receiving from a second authentication entity of the HPLMN an authentication information request comprising a concealed identifier SUCI of the user equipment;
wherein the concealed identifier SUCI comprises a replay attack protector R and one or more input parameters (e.g. SUPI) encrypted to be decryptable by the HPLMN;
de-concealing the concealed identifier SUCI to determine a replay attack protector R; and one or more input parameters P1...Pn including a long term identifier SUPI of the user equipment;
computing a verification hash VH* that is hash result of each of the concealed identifier SUCI; of the one or more input parameters (e.g. SUPI); and of the replay attack protector R; producing a first authentication vector AV1 comprising HPLMN authentication data and the verification hash VH*; and
sending the first authentication vector AV1 to the second authentication entity of the HPLMN.

According to a fourth example aspect of the present invention, there is provided a method in a second authentication entity of a home public land mobile network, HPLMN, for registering or authenticating user equipment to a visited public land mobile network, VPLMN, the method comprising:
sending to a first authentication entity of the HPLMN an authentication information request comprising a concealed identifier of the user equipment;
wherein the concealed identifier SUCI comprises a replay attack protector R and one or more input parameters (e.g. SUPI) encrypted to be decryptable by the HPLMN;
receiving from the first authentication entity of the HPLMN a first authentication vector AV1 that comprises at least a challenge; a first response verifier XRES* and a verification hash VH* that is hash result of each of the concealed identifier SUCI; of the one or more input parameters (e.g. SUPI); and of the replay attack protector R;
storing the first response verifier XRES*;
computing a second response verifier HXRES* based on the first response verifier XRES* and the challenge of the first authentication vector;
computing a second session key K_{SEAF} based on the first session key K_{AUSF};
forming a second authentication vector AV2 that comprises the second response verifier HXRES* instead of the first response verifier XRES* and the second session key K_{SEAF} instead of the first session key K_{AUSF};
sending the second authentication vector AV2 to the first authentication entity of the HPLMN;
receiving from the VPLMN an authentication confirmation message comprising a UE response verifier RES* produced by the user equipment and checking if the UE response verifier RES* matches the stored first response verifier XRES* and considering the confirmation message as successfully verified if yes.

The computing of the second response verifier HXRES* may be performed by using a cryptographic hash function.

According to a fifth example aspect of the present invention, there is provided a network element for a visited public land mobile network, VPLMN, for registering or authenticating user equipment to the VPLMN and comprising:
a communication interface for communicating with the user equipment and for communicating with a home public land mobile network, HPLMN;
at least one memory for storing information; and
at least one processor configured, with the at least one memory and the communication interface, to perform the method of the first example aspect.

According to a sixth example aspect of the present invention, there is provided a network element for a home public land mobile network, HPLMN, for enabling a user equipment to register or authenticate to a visited public land mobile network, VPLMN, comprising:
a communication interface for communicating with the VPLMN;
at least one memory for storing information; and
at least one processor configured, with the at least one memory and the communication interface, to perform the method of the second to fourth example aspect.

According to a seventh example aspect of the present invention, there is provided a computer program comprising computer executable program code configured to cause a network element for a visited public land mobile network, VPLMN to execute the method of the first example aspect.

According to a seventh example aspect of the present invention, there is provided a computer program comprising computer executable program code configured to cause a network element for a home public land mobile network, HPLMN to execute the method of any one of the second to the fourth example aspect.

The computer program of any example aspect may be stored in a computer readable memory medium.

In an example embodiment, the verification hash is a part of the first and/or second authentication vector logically, while the verification hash is transferred separately from other data comprised by the authentication vector in question.

Any foregoing memory medium may comprise a digital data storage such as a data disc or diskette, optical storage, magnetic storage, holographic storage, optomagnetic storage, phase-change memory, resistive random access memory, magnetic random access memory, solid-electrolyte memory, ferroelectric random access memory, organic memory or polymer memory. The memory medium may be formed into a device without other substantial functions than storing memory or it may be formed as part of a device with other functions, including but not limited to a memory of a computer, a chip set, and a sub assembly of an electronic device. The memory medium may be a non-transitory memory medium.

Different non-binding example aspects and embodiments of the present invention have been illustrated in the foregoing. The embodiments in the foregoing are used merely to explain selected aspects or steps that may be utilized in implementations of the present invention. Some embodiments may be presented only with reference to certain example aspects of the invention. It should be appreciated that corresponding embodiments may apply to other example aspects as well.

### BRIEF DESCRIPTION OF THE DRAWINGS

For a more complete understanding of example embodiments of the present invention, reference is now made to the following descriptions taken in connection with the accompanying drawings in which:
Fig. 1 shows an architectural drawing of a system of an example embodiment;
Fig. 2 shows a flow chart of a process of an example embodiment;
Fig. 3 shows a block diagram of an apparatus of an example embodiment;
Fig. 4 shows a block diagram of another apparatus of an example embodiment; and
Fig. 5 shows a signaling chart of an example embodiment.

### DETAILED DESCRIPTON OF THE DRAWINGS

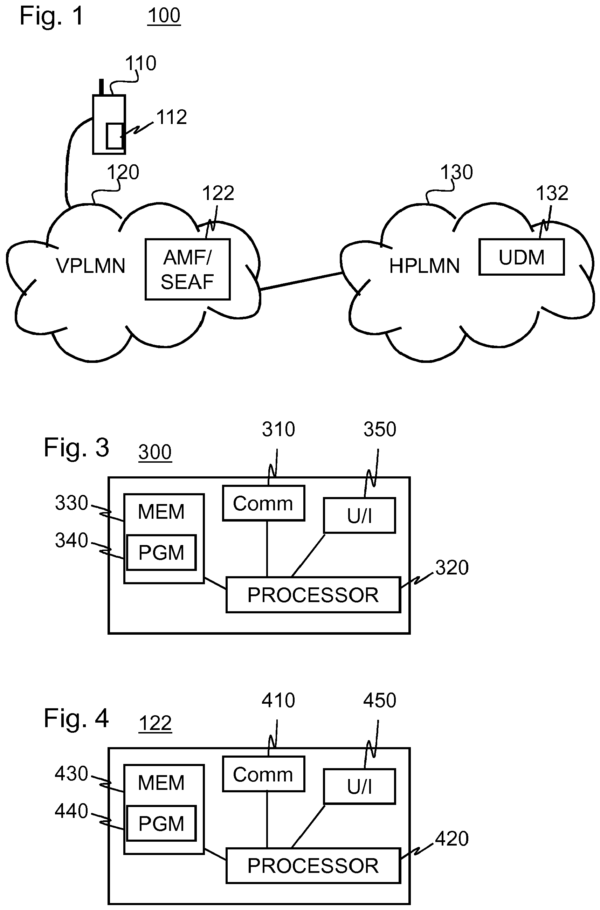

An example embodiment of the present invention and its potential advantages are understood by referring to Figs. 1 through 5 of the drawings. In this document, like reference signs denote like parts or steps.

Fig. 1 shows an architectural drawing of a system 100 of an example embodiment. The system 100 comprises User Equipment (UE) 110 that includes a subscriber module 112 (e.g. a SIM or USIM) either as a hardware or software implemented function. It is irrelevant for many embodiments of the present invention whether particular operation at the UE 110 is performed purely by a User Equipment when understood without the subscriber module 112, by the subscriber module 112, or collectively by the UE 110 and the subscriber module 112. In sake of simplicity, action at the UE 110 may be described with an intent to cover acts taken by either or both the UE 110 and the subscriber module 112.

The system 100 further comprises a Visited Public Land Mobile Network (VPLMN) 120 that includes a network element 122 such as Core Access and Mobility Management Function (AMF) or a security anchor function (SEAF). Notice that the network element 122 need not be solely for performing the functions disclosed herein but the network element 122 may further be configured to perform various other functions. In practice, the network element 122 may be formed of one or more parts of the VPLMN 120 and/or software run by the VPLMN. Hence, the network element 122 should be understood broadly.

The system 100 further comprises a Home Land Mobile Network (HPLMN) 130. The HPLMN comprises in an example embodiment a Unified Data Management (UDM) function 132.

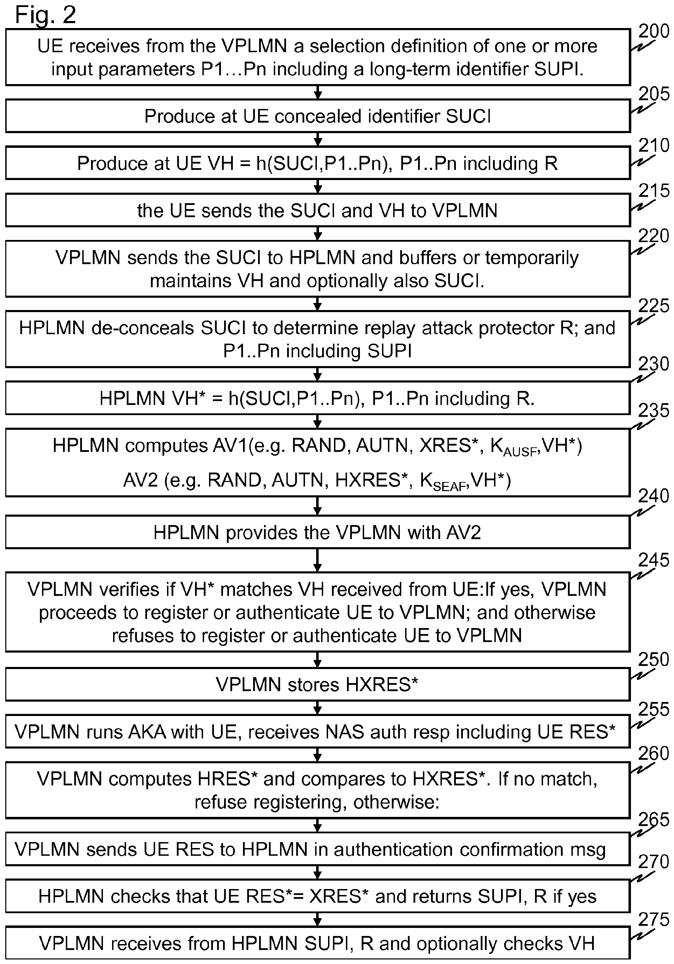

The terms visited and home Land Mobile Network refer to the role of the network in question with regard to the UE 110 or more particularly with regard to the subscription of the UE 112. The Land Mobile Network whose subscriber the UE 110 is (e.g. based on its current subscriber module 112) is denoted as the HPLMN and a Land Mobile Network to which the UE 110 has roamed is denoted as the VPLMN. At any one time, typical Land Mobile Networks act for some subscribers as the HPLMN and for some other subscribers as the VPLMN. Fig. 2 shows a flow chart of a process of an example embodiment.

In one embodiment, in step 200, the UE 110 receives from the VPLMN 120 a selection definition of one or more input parameters P1...Pn including a long-term identifier SUPI.

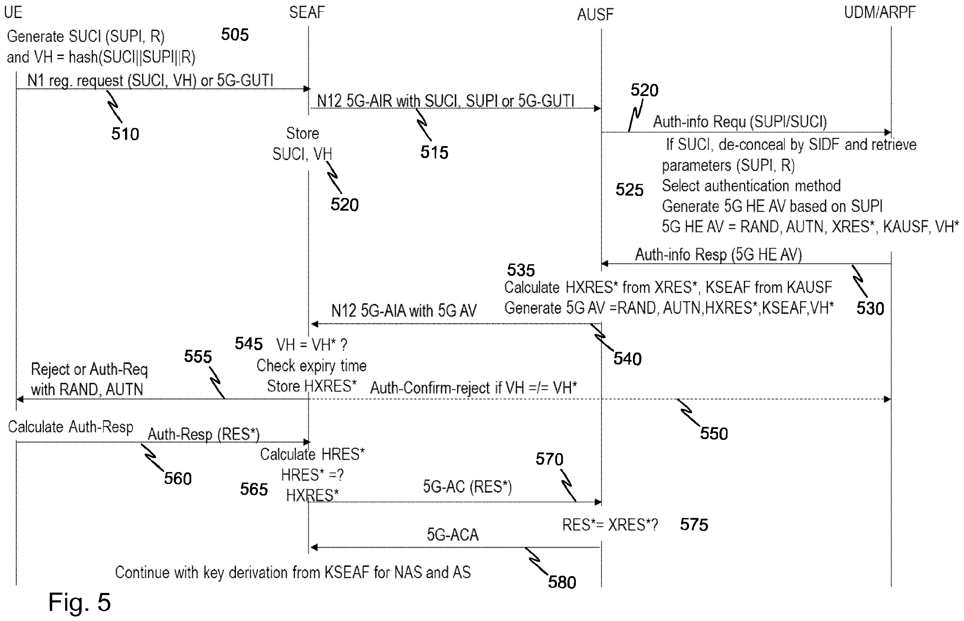

In step 205 (see also step 505 of Fig. 5), a concealed identifier SUCI is produced at the UE110, optionally within a subscriber module using the long-term identifier SUPI e.g. as SUCI = PK_{HPLMN}(R, P1...Pn) in any order and the one or more input parameters as further input for the encryption, when one of the input parameters is SUPI. In order to allow conveying of previously unspecified different ones of the input parameters, in one example embodiment, a given order is specified for the input parameters. In another example embodiment, an input parameter indicator is used in encrypting the concealed identifier. The denotation PK_{HPLMN}() indicates encryption of the parameters indicated within parenthesis using an encryption key PK_{HPLMN} of the HPLMN 130. R designates a replay attack protector such as a cryptographic nonce, e.g. an arbitrary or random number or code. In an example embodiment, the encryption key of the HPLMN 130 is an encryption key of an Authentication Server Function AUSF of the HPLMN 130 i.e. PKHPLMN may represent PK_{AUSF}.

In step 210 (see also step 510 of Fig. 5), either simultaneously or before or after the producing the concealed identifier, a verification hash VH is produced by the UE 110 or the subscriber module 112. The verification hash VH is in an example embodiment a cryptographic hash of the replay attack protector R, the concealed identifier, and the input parameters, e.g. as VH=H(SUCI, R, P1...Pn) in any order. The verification hash VH is included in an initial registration or an authentication response or in a NAS SMC complete message of the UE 110 in an example embodiment. H denotes a cryptographic hash function configured to hinder determination of source information from the result of the hash code.

Notice that in the encryption and hashing examples of preceding paragraphs, parameters were jointly used as a source of a cryptographic function (encryption or hashing). Comma as a delimiter is only intended to distinguish the different parameters, but these parameters can be combined in any manner and order as per implementation. For example, any of the codes and parameters can be concatenated, or each character can be summed up and optionally a modulo of e.g. 255 can be taken, and/or the parameters can be combined with XOR etc. Furthermore, truncation or other reduction of data (each puncturing) can be freely applied to reduce length or computational burden in any of the codes or parameters or results of functions.

In step 215 (510), the UE 110 sends the concealed identifier and the verification hash to the VPLMN 120, for example to the network element 122.

In step 220 (515), the VPLMN 120 sends the concealed identifier SUCI to the HPLMN 130 and buffers or temporarily maintains (520) the received verification hash VH and optionally also the concealed identifier. In an example embodiment, the following steps that are performed in the HPLMN 130 are performed by a Unified Data Management (UDM) function of the HPLMN unless otherwise indicated.

In an embodiment, the VPLMN 120 SEAF therein communicates with AUSF at the HPLMN 130. Fig. 5 exemplifies one such an embodiment and after step 220, the AUSF of the HPLMN 130 sends an auth-info request (SUPI or SUCI) to a UDM/Authentication Credential Repository and Processing Function (ARPF) of the HPLM. In this case where the SUCI based registration is being described, the request will contain the SUCI.

In step 225 (525), HPLMN 130 (UDM/ARPF) de-conceals SUCI to determine replay attack protector R; and P1...Pn including SUPI.

In step 230 (525), the HPLMN 130 computes a verification hash VH* that is hash result of each of SUCI; the input parameters P1...Pn(including SUPI in an embodiment); and R.

In step 235 (525), the HPLMN 130 computes a first authentication vector AV1 (5G HE AV in Fig. 5) comprising a challenge RAND; an authentication token AUTN; first response verifier XRES*; a first session key K_{AUSF} and a verification hash VH* that is hash result of each of the concealed identifier SUCI; of the one or more input parameters (e.g. SUPI); and of the replay attack protector R. The HPLMN 130 further computes (535 at AUSF) a second authentication vector AV2 (5G AV) comprising the challenge RAND (same as in the first authentication vector AV1); the authentication token AUTN (also same as in first authentication vector AV1); second response verifier HXRES* (e.g. HXRES* = h(RAND,XRES*); a second session key K_{SEAF} (e.g. K_{SEAF} = f(VPLMN ID, K_{AUSF}) wherein f() is a cryptographic function) and a verification hash VH* that is hash result of each of the concealed identifier SUCI; of the one or more input parameters (e.g. SUPI); and of the replay attack protector R.

In step 240 (540), the HPLMN 130 provides the VPLMN 120 with AV2 (5G AV).

In step 245 (545), the VPLMN 120 verifies if VH* matches VH received from UE. If yes, VPLMN 120 will proceed to register or authenticate the user equipment to the VPLMN 120; and otherwise refuse to register or authenticate the user equipment to the VPLMN 120. In Fig. 5 step 545, it is also checked that a respective timer has not yet expired: if it has, a new second authentication vector should be requested by the VPLMN 120 from the HPLMN 130. Fig. 5 also shows a signal 550 to the HPLMN 130 (e.g. UDM/ARPF) from the VPLMN 120 in the case of refusing and a signal 555 to the UE 110 indicative of either refusal or of an auth-req message (with RAND, AUTN, for example).

In step 250, the VPLMN 120 stores (545) the second response verifier HXRES* from the AV received from the HPLMN 130. The VPLMN then performs 255 Authentication and Key Agreement Protocol (AKA) with the UE 110 and receives (560) an auth resp message from the UE, including a UE response verifier RES* computed at the UE e.g. based on the RAND and shared secret of the UE with a subscriber module such as USIM to produce RES and by deriving from RES the UE response verifier e.g. with mobile equipment of the UE.

In step 260 (565), the VPLMN 120 cryptographically verifies an authentication confirmation message containing the UE response verifier RES*, e.g. by computing the first response verifier HRES* from the UE response verifier RES* and RAND and comparing the first response verifier HRES* to HXRES for match indicating successful authentication. Notice that RES is used in this context to refer to a code produced by a subscriber module of the UE 110 based on a given challenge RAND, RES* refers to a cryptographic derivative of RES computed, for example, by mobile equipment (e.g. functionality other than the subscriber module), whereas XRES and XRES* refer to corresponding codes produced by a network authentication entity.

In step 265 (570), the VPLMN 120 sends to the HPLMN 130 an authentication confirmation message including the UE RES*.

In step 270 (575), the HPLMN 130 checks that the UE RES* matches the first response verifier XRES* produced by the HPLMN (UDM/ARPF) and if yes, the VPLMN may receive 275 (580) from the HPLMN 130 SUPI, R and can thereafter compute its own local version of the VH and check that the VH received from the UE 110 was correct.

If the HPLMN was truthful, the local version of verification hash VH matches that stored in step 220, otherwise the VPLMN 120 may reject the registering or authentication request of the UE 110. To this end, the VPLMN 120 may send a particular rejection message to the UE 110.

Fig. 3 shows a block diagram of an apparatus 300 such as a public land mobile network terminal according to an embodiment of the invention.

The apparatus 300 comprises a memory 330 including a persistent computer program code 340. The apparatus 300 further comprises a processor 320 for controlling the operation of the apparatus 300 using the computer program code 340, a communication unit 310 for communicating with various local devices and with the public land mobile networks. The communication unit 310 comprises, for example, a local area network (LAN) port; a wireless local area network (WLAN) unit; Bluetooth unit; cellular communication unit; or satellite communication unit. The processor 320 comprises, for example, any one or more of: a master control unit (MCU); a microprocessor; a digital signal processor (DSP); an application specific integrated circuit (ASIC); a field programmable gate array; and a microcontroller. The apparatus 300 optionally comprises a user interface 350.

Fig. 4 shows a block diagram of the network element 122 according to an embodiment of the invention for use in the VPLMN 120 or in the HPLMN 130. The network element may be formed of a server computer and suitable software. The network element 122 may comprise parallel components for improving resilience and/or speed of the network element 122.

The network element 122 comprises a memory 430 including a persistent computer program code 440. The network element 122 further comprises a processor 420 for controlling the operation of the network element 122 using the computer program code 440, a communication unit 410 for communicating with other networks and user equipment. The network element 122 optionally comprises a user interface 450. The communication unit 410 comprises, for example, one or more local area network (LAN) ports. The processor 420 comprises, for example, any one or more of: a master control unit (MCU); a microprocessor; a digital signal processor (DSP); an application specific integrated circuit (ASIC); a field programmable gate array; and a microcontroller.

Without in any way limiting the scope, interpretation, or application of the claims appearing below, a technical effect of one or more of the example embodiments disclosed herein is that possibility for lawful interception in a visited public land mobile network can be verified with fair degree of reliability with little computational cost and without need for new radio message signals over downlink. Another technical effect of one or more of the example embodiments disclosed herein is that the possibility of lawful interception may be tested so that the association of the long-term identifier and the concealed identifier is verifiable without need to transfer the long-term identifier over air interface without encryption even before any encrypted radio bearer is formed for the UE by the VPLMN, i.e. when transferring the verification hash VH in the registration or an authentication response or in a NAS SMC complete message. Yet further technical effect is that the VPLMN may identify a target through the long-term identifier, even though in the first moment only a concealed identifier is visible to the VPLMN or its AMF, i.e. when UE registers with or authenticates to the VPLMN using a SUCI that is encrypted to be unreadable by the VPLMN. Yet further technical effect is that the VPLMN can stop authentication in most cases immediately on receiving a first response from the HPLMN in beginning of a registration process without need for the HPLMN to reveal the long-term identifier to the VPLMN before the VPLMN has proven authentication of the UE to the VPLMN using shared secret of the UE and the HPLMN.

Embodiments of the present invention may be implemented in software, hardware, application logic or a combination of software, hardware and application logic. The software, application logic and/or hardware may reside entirely or in part on a memory of the apparatus 300 or the network element 122. In an example embodiment, the application logic, software or an instruction set is maintained on any one of various conventional computer-readable media. In the context of this document, a "computer-readable medium" may be any non-transitory media or means that can contain, store, communicate, propagate or transport the instructions for use by or in connection with an instruction execution system, apparatus, or device, such as a computer, with one example of a computer described and depicted in Fig. 4. A computer-readable medium may comprise a computer-readable storage medium that may be any media or means that can contain or store the instructions for use by or in connection with an instruction execution system, apparatus, or device, such as a computer.

If desired, the different functions discussed herein may be performed in a different order and/or concurrently with each other. Furthermore, if desired, one or more of the before-described functions may be optional or may be combined. For example, if desired, the verification hash can also be provided at other messages than the registering message.

Although various aspects of the invention are set out in the independent claims, other aspects of the invention comprise other combinations of features from the described embodiments and/or the dependent claims with the features of the independent claims, and not solely the combinations explicitly set out in the claims.

It is also noted herein that while the foregoing describes example embodiments of the invention, these descriptions should not be viewed in a limiting sense. Rather, there are several variations and modifications which may be made without departing from the scope of the present invention as defined in the appended claims.

## Claims

1. A method for registering or authenticating user equipment to a visited public land mobile network, VPLMN, comprising:
receiving by the VPLMN from the user equipment a verification hash; and a concealed identifier;
wherein the concealed identifier comprises a replay attack protector and one or more input parameters encrypted to be decryptable by a home public land mobile network, HPLMN; and the verification hash comprises a hash result of hash source data comprising each of the concealed identifier; the one or more input parameters; and a replay attack protector;
sending by the VPLMN the concealed identifier to the HPLMN; and
receiving by the VPLMN from the HPLMN a second authentication vector comprising a challenge; and a verification hash that is hash result of each of the concealed identifier; of the one or more input parameters; and of the replay attack protector;
verifying if the verification hash matches with the verification hash VH received from the user equipment and if yes:
proceeding to register or authenticate the user equipment to the VPLMN; and otherwise refusing to register or authenticate the user equipment to the VPLMN.

2. The method of claim 1, wherein the one or more input parameters include the long-term identifier.

3. The method of claim 1 or 2, wherein the second authentication vector further comprises a second response verifier formed by cryptographic hashing of at least one of: a challenge; a first response verifier; an authentication token; and a second session key.

4. The method of any one of preceding claims, further comprising:
sending an authentication confirmation message to the HPLMN and receiving the input parameters from the HPLMN;
computing a local version of the verification hash; and
comparing the local version of the verification hash with the verification hash received from the user equipment or with the verification hash received from the HPLMN.

5. The method of any one of preceding claims, wherein the concealed identifier is sent by the VPLMN to the HPLMN together with an identifier of the VPLMN.

6. The method of any one of preceding claims, wherein the input parameters comprise any one or more of: a subscriber identity; an international mobile subscriber identity; a subscription permanent identifier; a mobile station international ISDN number; a user equipment identity such as an international mobile equipment identity or a permanent equipment identifier.

7. The method of any one of preceding claims, wherein the replay attack protector is transferred between the VPLMN and the user equipment only with cryptographic protection resulting from encryption or cryptographic hashing.

8. The concealed identifier may be encrypted with a shared secret of the user equipment and the HPLMN.

9. A method for enabling by a home public land mobile network, HPLMN, registering or authenticating user equipment to a visited public land mobile network, VPLMN, the method comprising:
receiving by the HPLMN from the VPLMN a long-term identifier request for a long-term identifier of the user equipment, the long-term identifier request comprising a concealed identifier that is concealed from others by encryption decryptable by the HPLMN;
de-concealing the concealed identifier to determine a replay attack protector; and one or more input parameters including a long term identifier of the user equipment;
computing a verification hash that is hash result of each of the concealed identifier; of the one or more input parameters ; and of the replay attack protector;
computing a first authentication vector that comprises at least a challenge; a first response verifier and a verification hash that is hash result of each of the concealed identifier; of the one or more input parameters; and of the replay attack protector;
storing the first response verifier;
computing a second response verifier based on the first response verifier and the challenge of the authentication vector;
computing a second session key based on the first session key;
forming a second authentication vector that comprises a second response verifier instead of a first response verifier and the second session key instead of the first session key;
sending the second authentication vector to the VPLMN; and
receiving from the VPLMN an authentication confirmation message comprising a UE response verifier produced by the user equipment and checking if the UE response verifier matches the stored first response verifier and considering the confirmation message as successfully verified if yes.

10. A method in a first authentication entity of a home public land mobile network, HPLMN, for registering or authenticating user equipment to a visited public land mobile network, VPLMN, the method comprising:
receiving from a second authentication entity of the HPLMN an authentication information request comprising a concealed identifier of the user equipment;
wherein the concealed identifier comprises a replay attack protector and one or more input parameters encrypted to be decryptable by the HPLMN;
de-concealing the concealed identifier to determine a replay attack protector; and one or more input parameters including a long term identifier of the user equipment;
computing a verification hash that is hash result of each of the concealed identifier; of the one or more input parameters; and of the replay attack protector; producing a first authentication vector comprising HPLMN authentication data and the verification hash; and
sending the first authentication vector to the second authentication entity of the HPLMN.

11. A method in a second authentication entity of a home public land mobile network, HPLMN, for registering or authenticating user equipment to a visited public land mobile network, VPLMN, the method comprising:
sending to a first authentication entity of the HPLMN an authentication information request comprising a concealed identifier of the user equipment;
wherein the concealed identifier comprises a replay attack protector and one or more input parameters encrypted to be decryptable by the HPLMN;
receiving from the first authentication entity of the HPLMN a first authentication vector that comprises at least a challenge; a first response verifier and a verification hash that is hash result of each of the concealed identifier; of the one or more input parameters; and of the replay attack protector;
storing the first response verifier;
computing a second response verifier based on the first response verifier and the challenge of the first authentication vector;
computing a second session key based on the first session key;
forming a second authentication vector that comprises the second response verifier instead of the first response verifier and the second session key instead of the first session key;
sending the second authentication vector to the first authentication entity of the HPLMN;
receiving from the VPLMN an authentication confirmation message comprising a UE response verifier produced by the user equipment and checking if the UE response verifier matches the stored first response verifier and considering the confirmation message as successfully verified if yes.

12. The method of claim 11, wherein the computing of the second response verifier is performed by using a cryptographic hash function.

13. A network element for a visited public land mobile network, VPLMN, for registering or authenticating user equipment to the VPLMN and comprising:
a communication interface for communicating with the user equipment and for communicating with a home public land mobile network, HPLMN;
at least one memory for storing information; and
at least one processor configured, with the at least one memory and the communication interface, to perform the method of any one of claims 1 to 8.

14. A network element for a home public land mobile network, HPLMN, for enabling a user equipment to register or authenticate to a visited public land mobile network, VPLMN, comprising:
a communication interface for communicating with the VPLMN;
at least one memory for storing information; and
at least one processor configured, with the at least one memory and the communication interface, to perform the method of any one of claims 9 to 11.

15. A computer program comprising computer executable program code configured to cause a network element for a visited public land mobile network, VPLMN to execute the method of any one of claims 1 to 8.
